# FASCICULE DE BREVET EUROPEEN

(11) **EP 3 808 637 B1**
(45) Date de publication et mention de la délivrance du brevet: **16.08.2023**
(21) Numéro de dépôt: 20200032.9
(22) Date de dépôt: 05.10.2020
(51) Int. Cl.: B62D 43/08, B62D 43/10

(54) **VÉHICULE AUTOMOBILE COMPRENANT UN DISPOSITIF DE MAINTIEN D'UNE ROUE DANS SON COFFRE**
KRAFTFAHRZEUG, DAS EINE VORRICHTUNG ZUM BEFESTIGEN EINES ERSATZREIFENS IM KOFFERRAUM UMFASST
MOTOR VEHICLE COMPRISING A DEVICE FOR HOLDING A WHEEL IN ITS COMPARTMENT

(30) Priorité: 17.10.2019 FR 1911606
(43) Date de publication de la demande: 21.04.2021
(73) Titulaire: Renault s.a.s, 92100 Boulogne Billancourt (FR)
(72) Inventeur: BROISIN-DOUTAZ, Marc, 78280 Guyancourt (FR); LE-NEVE, Franck, 91190 Gif sur Yvette (FR); MULLER, Louis, 75011 PARIS (FR)
(74) Mandataire: Renault Group

(56) Documents cités:
- FR-A1- 2 863 245
- FR-A1- 3 058 978
- JP-A- H04 293 686
- JP-A- 2000 108 956
- JP-A- 2003 118 655

## Description

L'invention concerne le domaine des véhicules automobiles qui comprennent un dispositif de maintien d'une roue implanté dans le coffre d'un véhicule automobile.

On connaît divers dispositifs pour retenir une roue de secours au niveau du coffre de rangement à l'arrière d'un véhicule automobile.

Plus spécifiquement dans le cas où la roue de secours est retenue à l'intérieur du coffre, il est connu de disposer la roue de secours dans un logement en fond de coffre pour y disposer à plat ladite roue, et de retenir ladite roue à la paroi par un système utilisant un moyen de fixation central tel qu'une vis passant au centre évidé de la jante de la roue qui forme le trou de passage pour le moyeu, pour se visser à travers un pontet solidarisé à la caisse. Pour utiliser la roue de secours, il suffit de dévisser ladite vis et de retirer ladite roue. D'autres dispositifs peuvent être envisagés, tel le dispositif divulgué par FR2863245A1.

Les roues de secours actuelles, dites galettes, sont de taille inférieure aux roues d'usage qui équipent usuellement un véhicule automobile. Quand une roue d'usage doit être changée, par exemple du fait d'une crevaison, il est impossible de la ranger à la place de la roue de secours plus petite. La roue d'usage abîmée est ainsi souvent disposée libre dans le coffre, ou dans des logements aménagés dans le coffre tels que divulgués dans JP2000108956A et dans FR3058978A1

Cela pose des problèmes de confort et de sécurité du fait du risque de déplacements de la roue dans le coffre quand le véhicule roule. Il est en effet nécessaire que la roue soit maintenue efficacement dans le coffre, y compris en cas de choc ou de retournement du véhicule, la roue ne devant pas passer dans l'habitacle.

L'invention vise à résoudre au moins en partie ces inconvénients.

A cet effet l'invention propose un véhicule automobile comprenant un dispositif de maintien d'une roue implanté dans le coffre de rangement du véhicule qui comprend un compartiment de taille intérieure apte à loger à plat une roue de secours. Selon l'invention ledit dispositif comprend une structure filaire formée par un fil cintré apte à passer réversiblement d'une position abaissée sur ledit compartiment pour s'appliquer sur la roue de secours lorsqu'elle y repose à plat, vers une position relevée dans laquelle ladite structure filaire est apte à maintenir au moins transversalement une roue d'usage disposée debout dans un plan sensiblement incliné et en appui sur ladite structure filaire retenue en position relevée par des moyens de retenue, et des moyens d'arrimage coopèrent avec ladite structure filaire pour retenir ladite roue d'usage.

Plus particulièrement la roue d'usage maintenue debout est une roue de taille supérieure à la taille intérieure dudit compartiment.

On entend par « la roue est disposée debout dans un plan sensiblement inclinée, que ladite roue n'est pas posée à plat, mais qu'elle repose globalement sur sa bande de roulement et dans un plan plus ou moins incliné par rapport au plan vertical selon la taille du coffre et la place disponible.

Le dispositif selon l'invention permet en particulier, lorsque la roue de secours du véhicule doit être utilisée et ainsi située hors de son logement, de maintenir une roue dans le coffre, notamment une roue d'usage (abimée), de taille supérieure à la roue de secours qui la remplace sur le véhicule.

En particulier ledit compartiment est conformé au moins partiellement dans la paroi de fond du coffre. La roue qui se dispose debout repose plus particulièrement globalement sur sa bande de roulement en appui dans cette partie de compartiment.

Selon un mode de réalisation particulier de l'invention, lesdits moyens d'arrimage comprennent un lien de type sangle apte à passer dans la structure filaire et à se solidariser à des éléments d'arrimage intégrés à un élément structurel du véhicule. Plus particulièrement ledit lien est muni en chacune de ses extrémités de moyens de solidarisation avec lesdits éléments d'arrimage. En particulier lesdits éléments d'arrimage sont des anneaux intégrés à une paroi structurelle du coffre.

Selon un mode de réalisation particulier de l'invention, ledit dispositif comprend au moins une charnière solidarisée à un élément structurel du véhicule, apte à faire passer réversiblement ladite structure filaire d'une position abaissée à une position relevée. Plus particulièrement, au moins une portion dudit fil est intégrée à ladite charnière. De préférence ledit dispositif comprend deux charnières et chaque extrémité dudit fil est intégrée respectivement à une dite charnière. Plus particulièrement, ledit fil cintré est en métal et la au moins dite charnière est un cylindre creux métallique soudé à un élément structurel du véhicule, une bague en matière polymère étant montée glissante dans ledit cylindre. Une extrémité du fil est introduite dans ladite bague. En particulier, cette extrémité de fil est une portion de fil pliée.

Selon un mode de réalisation préféré de l'invention, lesdits moyens de retenue sont solidarisés à un élément structurel du véhicule. En particulier lesdits moyens de retenue comprennent au moins une patte de retenue apte à retenir ladite structure filaire en position relevée, ladite patte étant fixée à proximité de ladite au moins une charnière.

Selon un mode de réalisation préféré de l'invention, le véhicule comprend un tapis de coffre dont au moins une partie est repliable au-dessus de ladite structure filaire pour être maintenue en reposant sur ladite structure filaire lorsque ladite structure filaire est en position relevée.

En particulier, ledit fil cintré comprend des portions configurées pour retenir au moins transversalement la roue d'usage disposée debout, et est globalement configuré suivant une forme adaptée pour s'appliquer sur le pneumatique de la roue de secours à maintenir à plat. En particulier ledit fil cintré présente une forme globale de parallélogramme ayant quatre à six côtés.

Selon un mode de réalisation préféré de l'invention, ledit dispositif comprend un élément de fermeture et des moyens de verrouillage coopérant avec ledit élément de fermeture solidaires d'un élément structurel du véhicule. En particulier, ledit élément de fermeture que comporte ledit fil cintré est une boucle ouverte formée par une portion dudit fil, orientée perpendiculairement au plan moyen défini par ledit fil cintré, et orientée vers le bas quand la structure filaire est en position abaissée.

De préférence, ledit élément structurel du véhicule auquel sont solidarisés directement ou indirectement lesdits moyens de retenue, et/ou ladite au moins une charnière et/ou lesdits moyens de verrouillage, est la partie de caisse du véhicule formant la paroi de fond du coffre. Ainsi le dispositif de maintien de roue assure un maintien de roue particulièrement solide, les liaisons entre le dispositif et le coffre sont très résistantes mécaniquement.

Avantageusement, lesdits moyens de verrouillage coopérant avec ledit élément de fermeture comprennent une vis de fixation maintenue audit fil par une plaque solidaire dudit élément de fermeture, et ladite vis étant apte à se visser dans la paroi de caisse du véhicule, de préférence à travers un pontet de fixation fixé à la caisse. Cette configuration maintient la vis de fixation audit élément de fermeture et par conséquent au fil, pour éviter de perdre ladite vis.

En particulier selon l'invention, ledit véhicule comprend une batterie de traction et ledit coffre comprend en outre des éléments d'un système électrique relié à ladite batterie de traction.

D'autres particularités et avantages de l'invention ressortiront à la lecture de la description faite ci-après d'un mode de réalisation particulier de l'invention, donné à titre indicatif mais non limitatif, en référence aux dessins annexés pour lesquels
[Fig. 1] illustre, selon une vue partielle en perspective depuis l'arrière , un véhicule avec son coffre de rangement ouvert dans lequel est implanté un dispositif de maintien de roue selon l'invention; le dispositif maintenant une roue dans un plan sensiblement incliné ;
[Fig. 2] est un vue latérale, en coupe médiane, du coffre avec le dispositif de maintien de roue représenté en figure 1, avec la roue qui y est maintenue;
[Fig. 2A] est un vue de détails de la figure 2 illustrant le tapis de coffre replié ;
[Fig. 3] illustre schématiquement, selon une vue partielle en perspective de trois-quarts, un véhicule avec son coffre de rangement ouvert dans lequel est implanté un dispositif de maintien de roue selon l'invention tel que représenté en figure 1 , le dispositif maintenant à plat une roue de secours;
[Fig. 4] est un vue de détails, en perspective, d'une charnière et d'un moyen de retenue de la structure filaire d'un dispositif de maintien de roue tel que représenté en figures 1 à 3.

Les orientations exprimées dans la description des figures sont données en référence à un repère XYZ classique du véhicule dans lequel X représente la direction longitudinale avant-arrière du véhicule, orientée vers l'arrière, Y la direction transversale du véhicule, orientée vers la droite, et Z la direction verticale orientée vers le haut du véhicule.

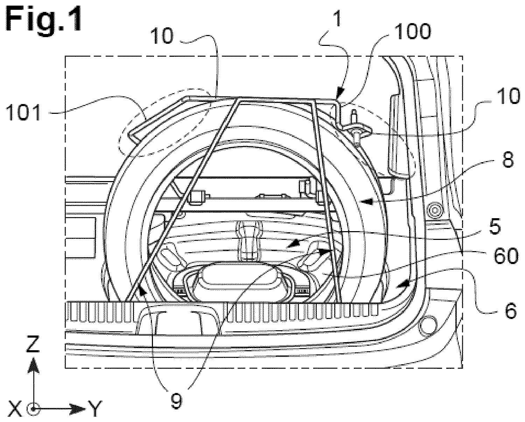

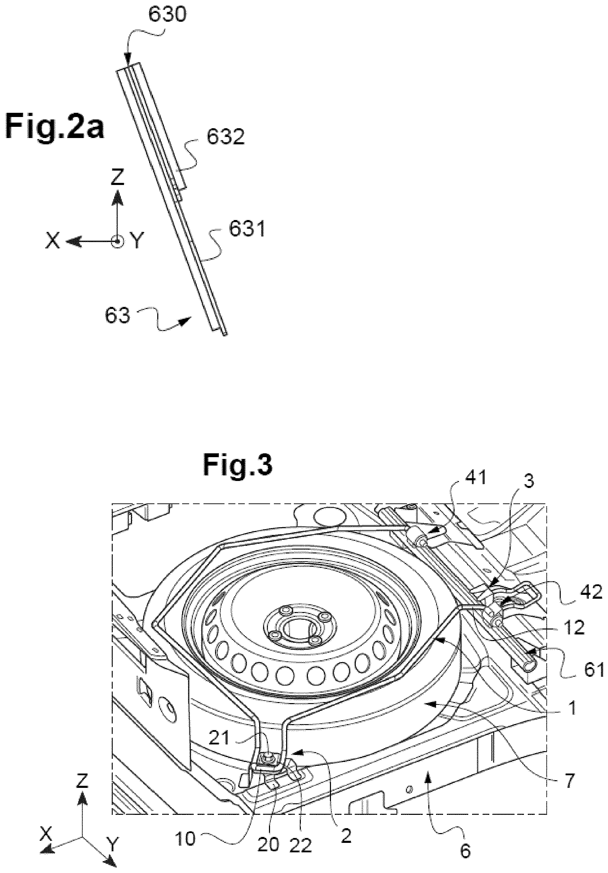

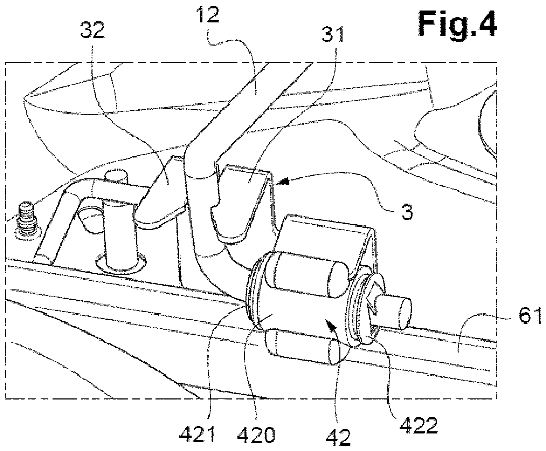

Les figures 1 à 4 vont être décrites ensemble dans la mesure où elles ont trait au même dispositif de maintien de roue implanté dans un coffre de véhicule, les figures 1 à 2 concernant le maintien d'une roue d'usage qui est par exemple crevée et qui a été remplacée sur le véhicule par la roue de secours qui était retenue par le dispositif selon la représentation en figure 3. La figure 4 est une vue de détails dudit dispositif. L'exemple va être décrit pour un véhicule comprenant des sièges arrière dont les dossier ferment l'avant du coffre, toutefois non limitativement de l'invention, la partie avant du coffre pouvant être fermée par les dossiers d'une unique rangée de sièges que comprendrait le véhicule , ou une banquette ou une cloison adaptée.

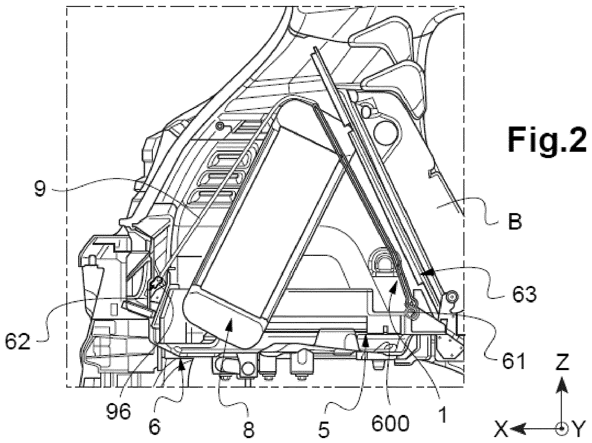

Les figures 1 à 3 illustrent un véhicule dont le coffre de rangement, à l'arrière du véhicule, est ouvert et dans lequel est implanté un dispositif de maintien de roue selon l'invention. Le fond de coffre, c'est-à-dire la partie plancher du coffre ou encore la partie sous le tapis de coffre, comporte un évidement formant le compartiment 5 dans lequel peut être logée à plat la roue de secours 7 du véhicule (figure 3). La roue de secours 7 repose à plat sur la paroi de caisse 6 formant la paroi de fond structurelle du véhicule, et plus particulièrement sur une partie 600 de la paroi de fond structurelle du coffre 60 conformée sensiblement à la forme et taille de la roue de secours à loger ( voir références sur les figures 1 et 2). Le dispositif de maintien de roue comporte une structure filaire 1, constituée par un fil cintré dont chaque portion d' extrémité 12 est solidaire d'une charnière 41, 42 solidarisée à la paroi de caisse 6 du véhicule.

Lesdites charnières 41, 42 sont ainsi solidaires d'un élément structurel dans le coffre. Selon l'exemple, comme illustré par la vue de détails de l'une desdites charnières 42 en figure 4, une dite charnière est réalisée en fixant par soudage un cylindre creux 420 métallique à un élément structurel du véhicule tel qu'une barre métallique de protection 61, elle-même solidaire de la paroi de caisse du véhicule 6 , et plus particulièrement de la paroi de fond structurelle du coffre 60. Selon l'exemple la barre est une barre structurelle protégeant usuellement les sièges arrière d'une projection accidentelle d'un objet dans le coffre. Dans ce cylindre 420, est insérée une bague épaulée 421, en matière polymère, par exemple en POM (PolyOxyMéthylène), montée glissante. Symétriquement, pour chaque charnière, une extrémité coudée du fil est enfilée dans ladite bague contenue dans le cylindre respectif. Cette bague, en polymère de la famille des polyacétals, permet d'éviter le contact métal/métal entre le fil et le cylindre qui pourrait générer du bruit. Le maintien en position de l'ensemble est garanti par au moins une rondelle déformable 422 .

En outre, pour garantir une bonne ergonomie, ledit dispositif comprend des moyens de retenue de la structure filaire 1 en position relevée, plus ou moins inclinée par rapport au plan vertical, aptes à maintenir ladite structure filaire en position ouverte. La structure filaire peut ainsi dans sa position inclinée faire support pour une roue d'usage 8 ne logeant pas à plat dans ledit compartiment, et qui doit ainsi être disposée debout dans le coffre c'est-à-dire en reposant plus ou moins sur sa bande de roulement selon son inclinaison dans le compartiment 5, notamment en reposant debout dans la partie conformée 600 de la paroi de fond de coffre 60. Par ailleurs dans le cas d'une roue de secours 7 logeant à plat dans ledit compartiment, lesdits moyens de retenue de la structure filaire en position relevée permettent de libérer les mains d'un opérateur et facilitent ainsi le maniement de cette roue de secours avec les deux mains.

Selon l'exemple, et comme illustré par les détails en figure 4, lesdits moyens de retenue se présentent sous forme d'au moins une patte de retenue 3 fixée à une barre structurelle 61 et à proximité d'une dite charnière 42. Ladite patte 3 a une forme de griffe. Elle comprend deux branches 31, 32 orientées dans un plan sensiblement horizontal, écartées l'une de l'autre, entre lesquelles peut être enfoncé à force le fil de la structure filaire passant en position relevée, dans un plan plus ou moins incliné par rapport au plan vertical, par coincement dudit fil en une zone proche de l'extrémité du fil cintré insérée dans la charnière. Ladite patte est par exemple en tôle, soudée à ladite barre structurelle en métal 61.

En outre, ledit fil cintré comporte une portion en boucle qui constitue l'élément de fermeture 10 de la structure filaire en coopération avec des moyens de verrouillage 2 se verrouillant réversiblement dans la paroi de caisse 6, et plus particulièrement de fond de coffre 60. La boucle de fermeture 10 est orientée sensiblement perpendiculairement au plan moyen de la partie filaire qui vient en appui sur le pneumatique de la roue 7 logeable dans le compartiment 5 ou en support de la roue d'usage plus grande 8 se logeant debout.

Ledit fil cintré 1 a une forme globalement d'un U présentant quelques angles afin de créer des zones de maintien d'une roue en fonction de la position abaissée ou relevée de la structure filaire, soit pour une roue à maintenir en position à plat ou debout dans le coffre. Par exemple la forme en U est grossièrement celle d'un parallélogramme, selon l'exemple à cinq côtés.

Dans le cas de la retenue de la roue d'usage 8 (figures 1 et 2), qui ne peut être disposée à plat dans le compartiment 5 car elle est de taille supérieure de celle de la roue de secours 7, ladite roue d'usage est disposée debout dans le coffre, dans un plan incliné dirigé du bord arrière du coffre 62 vers le dossier des sièges arrière B du véhicule. Ladite roue d'usage 8 est ainsi en appui en sa bande de roulement dans ledit compartiment 5, en particulier dans la partie conformée 600 de la paroi de fond 60 et sur la structure filaire 1 du dispositif en position relevée vers le dossier des sièges arrière B. Ladite roue 8 est donc plus particulièrement en appui sur la face interne de la structure filaire. Le fil cintré 10 présente plusieurs portions de maintien 100, 101 (entourées de pointillés sur la figure 1) configurées pour retenir la roue 8 debout, en la calant transversalement (direction Y), de sorte que ladite roue peut être retenue debout, et sensiblement inclinée, dans le coffre. Selon l'exemple, ces dites portions de maintien sont la portion de fil 100 qui comprend la boucle de fermeture 10 qui fait saillie par rapport au plan moyen de la structure filaire et une portion 101 qui lui y transversalement opposée et où le fil est coudé. La roue d'usage 8 ainsi maintenue ne peut rouler transversalement dans le coffre

En outre une sangle d'arrimage 9 dont chaque extrémité est munie de moyens de fixation peut passer dans la structure filaire et se fixer en ses dites extrémités à des anneaux d'arrimage 96 solidarisés à la paroi arrière de coffre 62 (figures 1 et 2). La paroi arrière de coffre 62 est un élément structurel du coffre, et plus généralement un élément structurel du véhicule. La roue d'usage 8 est ainsi parfaitement maintenue dans toutes les directions, y compris dans le plan vertical, ce qui évite sa projection dans le coffre en cas de retournement du véhicule lors d'un accident.

La figure 2A est une vue de détail de la garniture de coffre formant le tapis de coffre 63, par exemple une moquette, qui vient recouvrir ledit dispositif de maintien de la roue, en particulier par dessus la structure filaire quand elle est fermée, c'est-à-dire en position abaissée sur le compartiment logeant la roue de secours. Ce tapis de coffre 63 comprend au moins une zone pliable 630, pour qu'au moins la partie recouvrant le dispositif soit relevable au niveau de la structure filaire sans être bloquée par la tablette de coffre, usuellement disposée horizontalement en bas de la lunette arrière d'un véhicule et qui ferme le haut du coffre en évitant d'exposer à la vue les objets contenus dans le coffre. Le tapis de coffre peut comporter une ou plusieurs zones pliables selon l'agencement du coffre. Ledit tapis est ainsi repliable, selon l'exemple en deux parties 631, 632 venant l'une sur l'autre, de sorte que le tapis peut passer sous la tablette de coffre. Cette zone repliable 630 peut se présenter par exemple sous forme d'un film charnière faisant jonction entre les deux parties de tapis 631, 632. Quand une roue 8 est maintenue debout, plus ou moins inclinée, par le dispositif, le tapis 63 est relevé, sa partie extrême arrière 632 étant repliée sur son autre partie 631, partie avant située au plus près du dossier des sièges arrière, et ces deux parties 631, 632 ainsi repliées l'une sur l'autre reposent sur la structure filaire relevée. Lorsque l'on souhaite accéder à la roue de secours 7 rangée à plat dans son compartiment, on replie ainsi le tapis et on le relève avec la structure filaire sur laquelle il repose.

Selon un exemple non représenté, la partie de tapis recouvrant le dispositif fermé, peut aussi être conçue suivant une découpe pour être amovible et ainsi être enlevée puis disposée pour reposer sur la structure filaire en position relevée ayant une fonction de support.

Dans le cas du maintien de la roue de secours 7 (figure 3), la structure filaire est appliquée sur la roue 7 disposée à plat dans le compartiment 5, en particulier à plat dans la partie conformée de la paroi de fond du coffre 60, ledit fil cintré venant bien en appui sur le pneumatique de la roue de secours à loger.

Une vis de verrouillage 21 permet de verrouiller la structure filaire, en position abaissée, par sa boucle de fermeture 10, la vis passant dans ladite boucle et se vissant dans la paroi de caisse 60 en fond de coffre. En outre des éléments de verrouillage complémentaires de ladite vis et solidaires de la boucle de fermeture 10 permettent de retenir la vis à la structure filaire déverrouillée, évitant ainsi d'égarer la vis lorsque la structure filaire est ouverte, c'est-à-dire en position relevée, la vis étant alors dévissée de la paroi de caisse. Pour cela, la vis de verrouillage 21 passe à travers une plaque 22 en face supérieure de laquelle s'encastre la boucle de fermeture 10 du fil. Par ailleurs une rondelle déformable est retenue autour de la vis, sous ladite plaque 22, pour garantir la bonne tenue de l'ensemble avec le pontet 20 soudé à la paroi de caisse 6.

Ladite structure filaire peut ainsi être maintenue à plat sur la roue de secours disposée à plat dans son compartiment, en trois points d'accroche à la caisse que constituent les deux points d'accroche dans les charnières solidaires de la caisse et le point de verrouillage à la caisse, au lieu d'un seul sur les solutions traditionnelles de fixation centrale en zone intérieure de coffre. La structure filaire présente de bons appuis sur le pneumatique de la roue de secours ce qui permet une bonne répartition des efforts sur la structure de maintien de ladite roue de secours, notamment en cas de chocs ou de retournement du véhicule. Ceci améliore donc la tenue de la roue de secours sur la caisse, diminuant ainsi fortement les risques de projection de cette dernière dans le coffre et donc dans l'habitacle.

L'invention a atteint ses objectifs. La structure filaire du dispositif de maintien de roue peut résister à d'importantes sollicitations. Le véhicule dont le coffre est équipé d'un dispositif de maintien de roue selon un agencement tel qu'on vient de le décrire permet de garantir que la roue maintenue reste solidaire d'un élément structurel du véhicule, que cette roue soit maintenue debout ou à plat selon sa taille, et ce même en condition de chocs ou d'accidents, et notamment en cas de retournement du véhicule. De plus, ladite invention présente l'avantage d'être économique.

L'invention est particulièrement bien adaptée aux véhicules électriques ou hybrides pour lesquels des éléments du système électrique sont implantés dans le coffre contenant aussi la roue de secours, et présentant ainsi peu de place disponible pour loger et maintenir efficacement une roue, et notamment une roue d'usage qui est de taille supérieure à la taille de la roue de secours.

## Revendications

1. Véhicule automobile comprenant un dispositif de maintien d'une roue implanté dans le coffre de rangement du véhicule qui comprend un compartiment (5) de taille intérieure apte à loger à plat une roue de secours (7), **caractérisé en ce que** ledit dispositif comprend une structure filaire (10) formée par un fil cintré apte à passer réversiblement d'une position abaissée sur ledit compartiment pour s'appliquer sur la roue de secours lorsqu'elle y repose à plat, vers une position relevée dans laquelle ladite structure filaire est apte à maintenir au moins transversalement une roue d'usage (8) disposée debout dans un plan sensiblement incliné et en appui sur ladite structure filaire retenue en position relevée par des moyens de retenue (3), et **en ce que** des moyens d'arrimage (9, 96) coopèrent avec ladite structure filaire pour retenir ladite roue d'usage.

2. Véhicule selon la revendication 1, **caractérisé en ce que** lesdits moyens d'arrimage comprennent un lien de type sangle (9) apte à passer dans ladite structure filaire et à se solidariser à des éléments d'arrimage (96) intégrés à un élément structurel du véhicule (60, 62).

3. Véhicule selon l'une des revendications 1 à 2, **caractérisé en ce que** ledit dispositif comprend au moins une charnière (41, 42) solidarisée à un élément structurel du véhicule (6, 60, 61), apte à faire passer réversiblement ladite structure filaire d'une position abaissée à une position relevée.

4. Véhicule selon l'une des revendications 1 à 3, **caractérisé en ce que** lesdits moyens de retenue (3) sont solidarisés à un élément structurel du véhicule (6, 60, 61).

5. Véhicule selon l'une des revendications 1 à 4, **caractérisé en ce qu'**il comprend un tapis de coffre (63) dont au moins une partie (631, 632) est repliable au-dessus de ladite structure filaire pour être maintenue en reposant sur ladite structure filaire lorsque ladite structure filaire est en position relevée.

6. Véhicule selon l'une des revendications 1 à 5, **caractérisé en ce que** ledit fil cintré comprend des portions (100, 101) configurées pour retenir au moins transversalement la roue d'usage (8), et est configuré suivant une forme adaptée pour s'appliquer sur le pneumatique de la roue de secours (7) à maintenir à plat, en particulier ledit fil cintré présente une forme globale de parallélogramme ayant quatre à six côtés.

7. Véhicule selon l'une des revendications 1 à 6, **caractérisé en ce que** ledit dispositif comprend un élément de fermeture (10) et des moyens de verrouillage (2) coopérant avec ledit élément de fermeture (10) solidaires d'un élément structurel du véhicule (6, 60).

8. Véhicule selon l'une des revendications 3, 4 ou 7, **caractérisé en ce que** ledit élément structurel du véhicule auquel sont solidarisés directement ou indirectement lesdits moyens de retenue (3), et/ou ladite au moins une charnière (42) et/ou lesdits moyens de verrouillage (2), est la partie de caisse du véhicule formant la paroi de fond du coffre (60).

9. Véhicule selon l'une des revendications 1 à 8, **caractérisé en ce qu'**il comprend une batterie de traction et que ledit coffre comprend en outre des éléments d'un système électrique relié à ladite batterie de traction. 1

## Patentansprüche

1. Kraftfahrzeug, umfassend eine Vorrichtung zum Halten eines Rads, die in den Kofferraum des Fahrzeugs eingesetzt ist, der ein Fach (5) mit einer inneren Größe umfasst, die dazu geeignet ist, ein Reserverad (7) flach aufzunehmen, **dadurch gekennzeichnet, dass** die Vorrichtung eine Drahtstruktur (10) umfasst, die durch einen gebogenen Draht ausgebildet ist, der dazu geeignet ist, reversibel aus einer auf das Fach abgesenkten Position, in der er am Reserverad anliegt, wenn dieses dort flach liegt, in eine angehobene Position überzugehen, in der die Drahtstruktur dazu geeignet ist, zumindest in Querrichtung ein Gebrauchsrad (8) zu halten, das in einer im Wesentlichen geneigten Ebene stehend angeordnet ist und an der Drahtstruktur anliegt, die in der angehobenen Position durch Haltemittel (3) gehalten wird, und dass Verzurrmittel (9, 96) mit der Drahtstruktur zusammenwirken, um das Gebrauchsrad zu halten.

2. Fahrzeug nach Anspruch 1, **dadurch gekennzeichnet, dass** die Verzurrmittel eine gurtartige Verbindung (9) umfassen, die dazu in der Lage ist, durch die Drahtstruktur zu verlaufen und sich mit Verzurrelementen (96) zu verbinden, die in ein Strukturelement des Fahrzeugs (60, 62) integriert sind.

3. Fahrzeug nach einem der Ansprüche 1 bis 2, **dadurch gekennzeichnet, dass** die Vorrichtung mindestens ein Scharnier (41, 42) umfasst, das fest mit einem Strukturelement des Fahrzeugs (6, 60, 61) verbunden und dazu geeignet ist, die Drahtstruktur reversibel aus einer abgesenkten Position in eine angehobene Position zu bringen.

4. Fahrzeug nach einem der Ansprüche 1 bis 3, **dadurch gekennzeichnet, dass** die Haltemittel (3) fest mit einem Strukturelement des Fahrzeugs (6, 60, 61) verbunden sind.

5. Fahrzeug nach einem der Ansprüche 1 bis 4, **dadurch gekennzeichnet, dass** es eine Kofferraummatte (63) umfasst, von der zumindest ein Teil (631, 632) über die Drahtstruktur klappbar ist, um auf der Drahtstruktur liegend gehalten zu werden, wenn sich die Drahtstruktur in der angehobenen Position befindet.

6. Fahrzeug nach einem der Ansprüche 1 bis 5, **dadurch gekennzeichnet, dass** der gebogene Draht Abschnitte (100, 101) umfasst, die dazu ausgelegt sind, das Gebrauchsrad (8) zumindest in Querrichtung zu halten, und in einer Form gestaltet ist, die dazu geeignet ist, am Reifen des Reserverads (7), das flach gehalten werden soll, anzuliegen, wobei der gebogene Draht insbesondere eine allgemeine Form eines Parallelogramms mit vier bis sechs Seiten aufweist.

7. Fahrzeug nach einem der Ansprüche 1 bis 6, **dadurch gekennzeichnet, dass** die Vorrichtung ein Verschlusselement (10) und mit dem Verschlusselement (10) zusammenwirkende Verschlussmittel (2) umfasst, die fest mit einem Strukturelement des Fahrzeugs (6, 60) verbunden sind.

8. Fahrzeug nach einem der Ansprüche 3, 4 oder 7, **dadurch gekennzeichnet, dass** das Strukturelement des Fahrzeugs, mit dem die Haltemittel (3) und/oder das mindestens eine Scharnier (42) und/oder die Verschlussmittel (2) direkt oder indirekt fest verbunden sind, der Karosserieteil des Fahrzeugs ist, der die Bodenwand des Kofferraums (60) bildet.

9. Fahrzeug nach einem der Ansprüche 1 bis 8, **dadurch gekennzeichnet, dass** es eine Antriebsbatterie umfasst und dass der Kofferraum ferner Elemente eines elektrischen Systems umfasst, das mit der Antriebsbatterie verbunden ist.

## Claims

1. Motor vehicle comprising a device for holding a wheel that is installed in the storage boot of the vehicle that comprises a compartment (5) of internal size suitable for housing a spare wheel (7) flat, **characterized in that** said device comprises a wire structure (10) formed by a bent wire that is able to pass reversibly from a position in which it is lowered over said compartment so as to press on the spare wheel when it rests flat therein, to a raised position in which said wire structure is able to hold, at least transversely, a standard wheel (8) disposed upright in a substantially inclined plane and bearing on said wire structure retained in the raised position by retaining means (3), and **in that** anchoring means (9, 96) cooperate with said wire structure to retain said standard wheel.

2. Vehicle according to Claim 1, **characterized in that** said anchoring means comprise a link of strap type (9) that is able to pass through said wire structure and to be secured to anchoring elements (96) integrated into a structural element of the vehicle (60, 62).

3. Vehicle according to either of Claims 1 and 2, **characterized in that** said device comprises at least one hinge (41, 42) secured to a structural element of the vehicle (6, 60, 61), which is able to make said wire structure pass reversibly from a lowered position to a raised position.

4. Vehicle according to one of Claims 1 to 3, **characterized in that** said retaining means (3) are secured to a structural element of the vehicle (6, 60, 61) .

5. Vehicle according to one of Claims 1 to 4, **characterized in that** it comprises a boot carpet (63) of which at least one part (631, 632) is able to be folded over on top of said wire structure so as to be held resting on said wire structure when said wire structure is in the raised position.

6. Vehicle according to one of Claims 1 to 5, **characterized in that** said bent wire comprises portions (100, 101) configured to retain, at least transversely, the standard wheel (8), and is configured according to a shape designed to press on the tyre of the spare wheel (7) to be held flat, in particular said bent wire has the overall shape of a parallelogram having four to six sides.

7. Vehicle according to one of Claims 1 to 6, **characterized in that** said device comprises a closure element (10) and locking means (2) cooperating with said closure element (10) that are secured to a structural element of the vehicle (6, 60).

8. Vehicle according to one of Claims 3, 4 or 7, **characterized in that** said structural element of the vehicle to which said retaining means (3), and/or said at least one hinge (42) and/or said locking means (2) are directly or indirectly secured, is the body part of the vehicle that forms the bottom wall of the boot (60).

9. Vehicle according to one of Claims 1 to 8, **characterized in that** it comprises a traction battery and **in that** said boot also comprises elements of an electrical system connected to said traction battery.
